# EUROPÄISCHE PATENTANMELDUNG

(11) **EP 4 242 611 A1**
(43) Veröffentlichungstag der Anmeldung: **13.09.2023**
(21) Anmeldenummer: 22160698.1
(22) Anmeldetag: 08.03.2022
(51) Int. Cl.: G01K 1/02, G01K 3/10, G01K 3/00, G01J 5/00, G01J 5/02, G01J 5/48, G01J 5/52, G01J 5/70, G06N 20/00

(54) **VERFAHREN ZUR ZUSTANDSÜBERWACHUNG EINES ELEKTRISCHEN GERÄTS UND ENTSPRECHENDE ANORDNUNG**

(71) Anmelder: Siemens Aktiengesellschaft, 80333 München (DE)
(72) Erfinder: Jäger, Michael, 81541 München (DE); Salecker, Jürgen, 81827 München (DE)
(74) Vertreter: Siemens Patent Attorneys

(57) **Zusammenfassung**

Das Verfahren zur Zustandsüberwachung eines elektrischen Geräts sieht vor, die Temperaturverteilung des elektrischen Geräts mit einem Sensorarray mit mehreren Sensorelementen zu erfassen und mit gespeicherten Referenzwerten zu vergleichen. Eine Abweichung größer als ein vorgegebener Schwellwert bei mindestens einem Messwert wird signalisiert, insbesondere können die Abweichungen der einzelnen Sensorelemente ortsaufgelöst in Form einer Differenzkarte dargestellt werden. Mit dem Verfahren und der Anordnung kann auf einfache und kostengünstige Weise ein Fehler im elektrischen Gerät lokalisiert werden. Für die Bestimmung der Referenzwerte und der Schwellwerte kann maschinelles Lernen verwendet werden.

## Beschreibung

Die vorliegende Erfindung betrifft ein Verfahren zur Zustandsüberwachung eines elektrischen Geräts sowie eine Anordnung zur Durchführung eines solchen Verfahrens.

Elektrische Geräte unterschiedlichster Art werden in unterschiedlichsten Bereichen eingesetzt, beispielsweise in der Industrie bei Herstellungsverfahren oder in der Datenverarbeitung. Dabei können Störungen auftreten, insbesondere dadurch, dass sie im Betrieb einem Verschleiß ausgesetzt sind. Weitere störende Einflüsse oder Fehler können durch Korrosion oder durch Ablagerungen wie beispielsweise Staub verursacht werden. Auch Feuchtigkeit, Umgebungstemperatur und andere externe Einflüsse können die Funktion beeinflussen und Störungen verursachen. Davon können alle Komponenten betroffen sein, also auch Zuleitungen oder mechanische Teile. Dies gilt für große Anlagen, beispiels-weise große Antriebe, ebenso wie für kleinere wie elektronische Bauteile.

Störungen beeinträchtigen die Funktion des Geräts und können außerdem für Benutzer eine Gefahr darstellen. Beispielsweise können Kontakte sich verzögert öffnen, so dass nach einem Abschaltbefehl ein Gerät noch mit einer Spannungsversorgung verbunden ist. Außerdem führen Störungen und Verschleiß oft zu einem höheren Energieverbrauch, bevor das elektrische Gerät möglicherweise komplett ausfällt.

In vielen Fällen entwickelt sich eine Störung über einen bestimmten Zeitraum, d.h. sie ist zu Beginn schwach ausgeprägt und nicht ohne weiteres erkennbar, und nimmt im Laufe der Zeit zu, ggf. bis zum Funktionsausfall des Geräts. Ein Beispiel hierfür ist die Erhöhung eines Übergangswiderstandes, insbesondere durch Korrosion oder Ablagerungen. Mit anderen Worten, der Zustand des Geräts verschlechtert sich mit der Zeit. Dies gilt insbesondere für Störungen, die durch Verschleiß von Komponenten verursacht sind.

Aufgabe der Erfindung ist es, ein Verfahren anzugeben, mit dem der Zustand eines elektrischen Geräts überwacht werden kann und eine Störung im Anfangsstadium erkannt werden kann. Dies Aufgabe wird gelöst durch ein Verfahren mit den Merkmalen des Patentanspruchs 1 und durch eine Anordnung gemäß Patentanspruch 8. Vorteilhafte Ausgestaltungen der Erfindung sind in den Unteransprüchen angegeben.

Die Erfindung beruht auf der Erkenntnis, dass bei einem elektrischen Gerät eine beginnende Störung in vielen Fällen mit einer Temperaturerhöhung einhergeht, beispielsweise durch eine Erhöhung des elektrischen Widerstands. Durch Verwendung eines Sensorarray mit mehreren Infrarotsensoren kann eine Temperaturerhöhung ortsaufgelöst festgestellt werden, wenn mindestens zwei Messungen zu verschiedenen Zeiten durchgeführt werden.

Die Erfindung sieht vor, eine Temperaturverteilung des elektrischen Geräts mit einem Sensorarray zu erfassen, das mehrere Sensorelemente aufweist, und erhaltene Messsignale an eine Auswerteeinheit zu übertragen. Die Auswerteeinheit vergleicht den Messwert von mindestens einem Sensorelement mit einem gespeicherten Referenzwert für dieses Sensorelement. Überschreitet die Abweichung einen Schwellwert, wird ein Signal ausgegeben.

Die Sensorelemente messen die Temperaturverteilung des elektrischen Geräts mit einer örtlichen Auflösung, die von der Anzahl und Anordnung der Sensorelemente abhängt. Durch die Verwendung des Sensorarrays kann die Störung lokalisiert werden und dadurch schneller und einfacher behoben werden. Mit dem Begriff elektrisches Gerät sind alle Arten, Größen und Installationen derartiger Geräte umfasst.

Vorzugsweise weist das Sensorarray eine zweidimensionale Anordnung der Sensorelemente auf, je nach zu überwachendem Gerät ist aber auch eine lineare Anordnung oder eine dreidimensionale Anordnung (d.h. die Sensorelemente liegen nicht in einer gemeinsamen Ebene) möglich und sinnvoll. Die Größe des Sensorarrays wird vorzugsweise an die Dimensionen des zu überwachenden Geräts oder des kritischen Bereichs des Geräts angepasst.

In einer Ausführungsform erstellt die Auswerteeinheit eine Differenzkarte aus den Messwerten und den gespeicherten Referenzwerten, beispielsweise in grafischer Form wie eine Landkarte oder als dreidimensionales Diagramm. Die Differenzkarte stellt zu einem bestimmten Zeitpunkt die Abweichung des Messwerts vom jeweiligen Referenzwert des Sensorelements dar. Vorzugsweise werden die Referenzwerte vorab durch eine Messung der Temperaturverteilung des elektrischen Geräts mit dem Sensorarray erhalten und gespeichert. Dadurch erfolgt quasi eine Kalibrierung: es werden die Temperaturwerte für die Sensorelemente für einen intakten Zustand des elektrischen Geräts gemessen und als Referenzwerte gespeichert. Es kann ein Referenzwert für jedes Sensorelement als Ergebnis von einer Messung oder von mehreren Messungen gespeichert werden.

Es können mehrere Referenzwerte für ein Sensorelement gespeichert werden, die unterschiedliche Zeiten und/oder unterschiedliche Betriebszustände repräsentieren. Mit anderen Worten, es liegen mehrere Datensätze als Referenzwerte für ein Sensorelement vor. Die Datensätze spiegeln unterschiedliche Situationen wider, die einen Einfluss auf die Messwerte, d.h. die Temperaturverteilung des elektrischen Geräts haben. Für die Zustandsbestimmung kann dann ein Vergleich mit mehreren Referenzwerten durchgeführt werden, wodurch die Zuverlässigkeit der Aussage erhöht wird. Alternativ kann derjenige Referenzwert zum Vergleich herangezogen werden, der eine möglichst ähnliche Zeit oder einen möglichst ähnlichen Betriebszustand repräsentiert. Der aktuelle Messwert kann als weiterer (Referenz-)Wert gespeichert werden.

Vorzugsweise werden die Referenzwerte durch einen selbstlernenden Prozess mithilfe maschinellen Lernens bestimmt. Durch wiederholte Messungen bei unterschiedlichen, aber weitgehend störungsfreien Betriebszuständen wird die KI trainiert, diese intakten Zustände zu erkennen. Als künstliche Intelligenz hierfür kann beispielsweise ein Convolutional Neural Network eingesetzt werden. Bei Vorliegen mehrerer Referenzwerte für unterschiedliche Zeiten und/oder durch aufeinanderfolgende Messungen der Temperaturverteilung in bestimmten Zeitintervallen kann auch besonders zuverlässig eine im Laufe der Zeit zunehmende Störung, beispielsweise durch zunehmenden Verschleiß, detektiert werden.

Ein Signal wird ausgegeben, wenn die Abweichung zwischen aktuellem Messwert und Referenzwert für zumindest ein Sensorelement einen vorgegebenen Schwellwert erreicht oder übersteigt. Unter den Begriff Signal fällt neben einem Signal, das ein technisches Gerät wie beispielsweise das elektrische Gerät steuert, auch jede Art der Anzeige oder Meldung. Es können unterschiedliche Signale für unterschiedliche Schwellwerte und/oder für unterschiedliche Sensorelemente vorgesehen sein. Es kann für ein Sensorelement, das die Temperatur einer besonders kritischen Komponente überwacht, ein anderer Schwellwert vorgegeben werden als für eine weniger kritische Komponente. Der Schwellwert kann durch maschinelles Lernen festgelegt werden.

Wenn das elektrische Gerät in einem Gehäuse untergebracht ist, kann das Sensorarray besonders einfach auf der Innenseite des Gehäuses angeordnet sein. Ein Anwendungsfall ist eine Anordnung von mehreren elektrischen Geräten oder mehreren Komponenten eines elektrischen Geräts in einem Schaltschrank oder anderweitigem gemeinsamen Gehäuse. Die Sensorelemente können in Form eines Gitters oder einer Matte mechanisch miteinander verbunden sein, wodurch die Anbringung am oder in der Nähe des elektrischen Geräts, beispielsweise an einer Gehäusetür, vereinfacht wird. Die Anordnung der Sensorelemente kann ein regelmäßiges Muster, beispielsweise in Reihen und Spalten, bilden, sie kann aber auch an das elektrische Gerät angepasst sein, indem in der Nähe von kritischen Komponenten ein Sensorelement vorhanden ist und an anderen Stellen nicht. Durch eine solche Anpassung wird die Überwachung verbessert, und gleichzeitig können die Anzahl der Sensorelemente und die Erfassung und Verarbeitung von Daten reduziert werden.

In einer Ausführungsform liefern die Sensorelemente liefern einen Messwert in analoger Form, und die Auswerteeinheit umfasst einen A/D-Wandler mit Multiplexer. Dadurch kann der A/D-Wandler eine große Anzahl an Sensorelementen abfragen, wobei ein gewünschter Abfragezyklus vorgegeben werden kann, beispielsweise 60 Sekunden, und kostengünstige Sensorelemente verwendet werden können. Die Übermittlung der Messwerte an die Auswerteeinheit oder zwischen Komponenten der Auswerteeinheit kann drahtlos oder drahtgebunden erfolgen. Vorteilhaft ist die Anbringung einer ersten Komponente der Auswerteeinheit mit einem A/D-Wandler in der Nähe der Sensoren, an die die Messwerte drahtgebunden übermittelt werden, und eine drahtlose weitere Übermittlung der digitalisierten Daten an eine zweite Komponente der Auswerteeinheit, die den Vergleich mit den Referenzwerten vornimmt.

Ein besonderer Vorteil der Erfindung liegt in der Verwendung von einfachen und kostengünstigen Infrarot-Sensorelementen und Auswerteelektronik, mit denen auch bei einem ausgedehnten elektrischen Gerät eine ortsaufgelöste Überwachung in einfacher Weise erfolgen kann, wodurch mögliche Fehler schnell lokalisiert und behoben werden können. Die Erfindung ist besonders vorteilhaft anwendbar bei elektrischen Geräten mit bewegten Teilen und entsprechend höherer Verschleißgefahr, beispielsweise Motoren und Antrieben. Ferner ist sie sehr vorteilhaft einsetzbar bei elektrischen Geräten bzw. Komponenten, die in einem Schaltschrank untergebracht sind, indem das Sensorarray an einer Wand oder Tür des Schaltschranks angeordnet wird.

Die Erfindung wird im Folgenden anhand von Ausführungsbeispielen näher erläutert. Es zeigen in schematischer Darstellung
Fig. 1 eine erste Ausführungsform der Erfindung mit einem gitterförmigen Sensorarray
Fig. 2 eine sich bei störungsfreiem Betrieb ergebende Temperaturkarte
Fig.3 eine sich bei einer Störung ergebende Temperaturkarte
Fig.4 eine zweite Ausführungsform der Erfindung mit einem angepassten Sensorarray

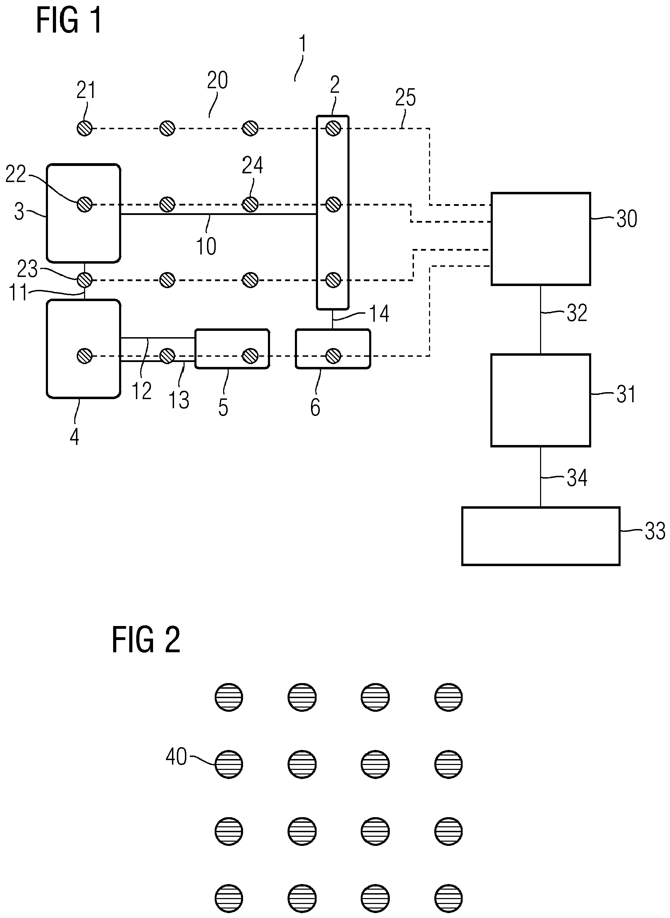

Figur 1 zeigt ein elektrisches Gerät 1 mit Komponenten 2, 3, 4, 5, 6, wobei einige der Komponenten mittels elektrischer Leitungen 10, 11, 12, 13, 14 miteinander verbunden sind. Das elektrische Gerät ist in einem (nicht dargestellten) Gehäuse untergebracht. Ein Sensorarray 20 weist gitterförmig, d.h. in Reihen und Spalten, angeordnete Infrarotsensoren als Sensorelemente auf, von denen einige in der Nähe einer Komponente oder von Leitungen des elektrischen Geräts angeordnet sind (beispielsweise Sensorelement 22 in der Nähe der Komponente 3, Sensorelement 23 in der Nähe der Leitung 11, Sensorelement 24 in der Nähe der Leitung 10). Das Sensorarray ist an der Innenseite des Gehäuses angebracht. Die Sensorelemente sind in geeigneter Weise mit einer ersten Komponente einer Auswerteeinheit 30 verbunden, was schematisch als Leitung 25 für die oberste Reihe der Sensorelemente dargestellt ist. Für diese Verbindung 25 sind unterschiedliche Realisierungsformen möglich (Bus, Sternverdrahtung etc.).

Die erste Komponente 30 der Auswerteeinheit umfasst einen A/D-Wandler und ein Sendemodul. Sie ist mit einer zweiten Komponente 31 der Auswerteeinheit, die ein Empfangsmodul aufweist, drahtlos verbunden (Verbindung 32). Als dritte Komponente der Auswerteeinheit ist eine Anzeigeeinheit 33 mit der zweiten Komponente 31 über die Verbindung 34 verbunden. Im Betrieb des elektrischen Geräts 1 erfassen die Sensorelemente des Sensorarrays 20 in vorgegebenen Zeitintervallen die Temperatur des jeweils in der Nähe liegenden Teils des elektrischen Geräts. Die Messwerte werden an die erste Komponente 30 der Auswerteeinheit übermittelt, wo sie in digitale Signale umgewandelt werden und drahtlos an die zweite Komponente 31 übermittelt werden. Die zweite Komponente der Auswerteinheit umfasst einen Speicher zur Speicherung der Messwerte unter Angabe des jeweiligen Sensorelements und Ort des Sensorelements. Im Laufe des Betriebs des elektrischen Geräts werden für jedes Sensorelement eine Anzahl von Temperaturwerten gespeichert, aus denen - ggf. mit maschinellem Lernen - ein oder mehrere Referenzwerte für das jeweilige Sensorelement sowie ein oder mehrere Schwellwerte für die Abweichung vom Referenzwert bestimmt werden.

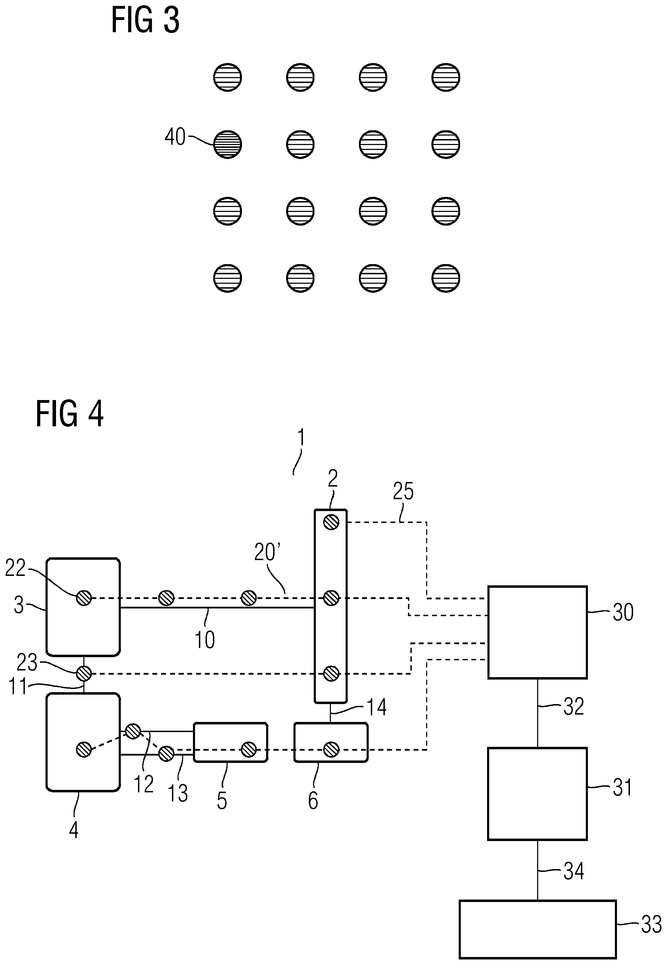

Die Abweichung der aktuell gemessenen Temperaturwerte vom jeweiligen Referenzwert kann in Form einer Differenzkarte, die schematisch in Figur 2 gezeigt ist, an der Anzeige der dritten Komponente der Auswerteeinheit 33 dargestellt werden. Im ungestörten Betrieb des elektrischen Geräts ist die Abweichung bei allen Messpunkten (40) unterhalb einer ersten Schwelle, was durch die helle Schraffur dargestellt ist. Beispielsweise kann für alle Sensorelemente als Referenzwert derselbe Wert von 40°C betragen und als Schwellwert +23°C, d.h. in der in Figur 3 dargestellten Situation messen alle Sensorelemente eine Temperatur von maximal 63°C.

Figur 3 zeigt die Differenzkarte, wenn im weiteren Betrieb des elektrischen Geräts eine Erwärmung beispielsweise aufgrund von Verschleiß bei der Komponente 3 auftritt. Da das Sensorelement 22 eine erhöhte Temperatur von beispielsweise 69°C misst, ist die Abweichung von seinem Referenzwert höher als der Schwellwert, was durch die dunklere Schraffierung am Punkt 40 der Differenzkarte dargestellt ist. Es ist einfach erkennbar, dass dies durch eine Temperaturerhöhung in der Komponente 3 des elektrischen Geräts verursacht ist. Mit anderen Worten, mithilfe des Sensorarrays 20 wird der Zustand des elektrischen Geräts 1 überwacht und eine Zustandsänderung wird durch die Auswertung in Form der Differenzkarte optisch signalisiert.

Es ist auch möglich, unterschiedliche Anzeigen oder Signale abhängig von der Größe der Abweichung und/oder vom betroffenen Sensorelement auszugeben. Anstelle oder zusätzlich zu einer optischen Signalisierung können weitere Schritte ausgelöst werden, beispielsweise kann automatisch eine Abschaltung des elektrischen Geräts erfolgen.

Figur 4 zeigt eine alternatives Sensorarray 20', das an das elektrische Gerät 1 angepasst ist. Im Übrigen entsprechen der Aufbau und Bezugsziffern dem in Figur 1 gezeigten Ausführungsbeispiel. Es sind nur Sensorelemente vorhanden, die in der Nähe von Komponenten angeordnet sind. Die Leitungen 12 und 13 können mit getrennten Sensorelementen überwacht werden. Eine Zustandsüberwachung erfolgt wie vorstehend beschrieben.

## Patentansprüche

1. Verfahren zur Zustandsüberwachung eines elektrischen Geräts mit folgenden Schritten
- Erfassen einer Temperaturverteilung des elektrischen Geräts (1) mit einem Sensorarray (20, 20') mit mehreren Sensorelementen (21, 22, 23, 24)
- Übertragen der Messwerte an eine Auswerteeinheit (30, 31, 32)
- Vergleichen des Messwerts von mindestens einem Sensorelement mit einem gespeicherten Referenzwert für das Sensorelement
- Ausgeben eines Signals, wenn die Abweichung größer als ein Schwellwert ist.

2. Verfahren nach Anspruch 1, **dadurch gekennzeichnet, dass** ein Sensorarray mit einer zweidimensionalen Anordnung der Sensorelemente (21, 22, 23, 24) verwendet wird.

3. Verfahren nach einem der vorherigen Ansprüche, **dadurch gekennzeichnet, dass** die Auswerteeinheit (30, 31, 32) eine Differenzkarte aus den Messwerten und den gespeicherten Referenzwerten erzeugt.

4. Verfahren nach einem der vorherigen Ansprüche, **dadurch gekennzeichnet, dass** die Referenzwerte durch eine Messung der Temperaturverteilung mit dem Sensorarray (20) zu mindestens einem vorherigen Zeitpunkt erzeugt werden.

5. Verfahren nach einem der vorherigen Ansprüche, **dadurch gekennzeichnet, dass** die Referenzwerte aus mehreren Messungen der Temperaturverteilung mithilfe maschinellen Lernens erzeugt werden.

6. Verfahren nach einem der vorherigen Ansprüche, **dadurch gekennzeichnet, dass** mehrere Referenzwerte für ein Sensorelement gespeichert sind, die unterschiedliche Zeiten und/oder unterschiedliche Betriebszustände des elektrischen Geräts (1) repräsentieren.

7. Verfahren nach einem der vorherigen Ansprüche, **dadurch gekennzeichnet, dass** die Messwerte als weitere Referenzwerte für die jeweiligen Sensorelemente gespeichert werden.

8. Anordnung zur Durchführung eines Verfahrens nach einem der vorherigen Ansprüche, mit
- einem Sensorarray (20, 20') zur Temperaturmessung mit mindestens zwei Sensorelementen (21, 22, 23, 24)
- einer Übertragungseinrichtung (25) zum Übertragen der Messwerte an eine Auswerteeinheit (30, 31, 33),
- wobei die Auswerteeinheit ausgebildet ist, den Messwert von mindestens einem Sensorelement mit einem gespeicherten Referenzwert für das Sensorelement (21, 22, 23, 24) zu vergleichen und ein Signal auszugeben, wenn die Abweichung größer als ein Schwellwert ist.

9. Anordnung nach dem vorherigen Anspruch, **dadurch gekennzeichnet, dass** das Sensorarray (20) eine zweidimensionale Anordnung der Sensorelemente (21, 22, 23, 24) aufweist.

10. Anordnung nach einem der vorherigen Ansprüche, **dadurch gekennzeichnet, dass** der Ort der Sensorelemente (21, 22, 23, 24) an das elektrische Gerät angepasst ist.

11. Anordnung nach einem der vorherigen Ansprüche, **dadurch gekennzeichnet, dass** die Sensorelemente (21, 22, 23, 24) als Infrarot-Sensoren ausgebildet sind.

12. Anordnung nach einem der vorherigen Ansprüche, **dadurch gekennzeichnet, dass** das Sensorarray zur Anbringung auf der Innenseite eines Gehäuses für das elektrische Gerät, insbesondere auf der Innenseite eines Schaltschranks, ausgebildet ist.

13. Anordnung nach einem der vorherigen Ansprüche, **dadurch gekennzeichnet, dass** die Auswerteinheit einen A/D-Wandler (30) umfasst.
